# EUROPEAN PATENT SPECIFICATION

(11) **EP 3 549 327 B1**
(45) Date of publication and mention of the grant of the patent: **05.01.2022**
(21) Application number: 17797624.8
(22) Date of filing: 09.11.2017
(51) Int. Cl.: H04L 29/08

(54) **TRANSMISSION SYSTEM FOR MONITORING EQUIPMENT IN RAT TRAPS POSITIONED IN SEWERS, SHAFTS, AND WELLS**
ÜBERTRAGUNGSSYSTEM ZUR ÜBERWACHUNG VON AUSRÜSTUNG IN RATTENFALLEN, DIE IN KANÄLEN, SCHÄCHTEN UND BRUNNEN ANGEORDNET SIND
SYSTÈME DE TRANSMISSION POUR SURVEILLER UN ÉQUIPEMENT DANS DES PIÈGES À RAT POSITIONNÉS DANS DES ÉGOUTS, DES ARBRES ET DES PUITS

(30) Priority: 01.12.2016 DK PA201670956; 01.12.2016 DK BA201600138 U
(43) Date of publication of application: 09.10.2019
(73) Proprietor: Ratél ApS, 6000 Kolding (DK)
(72) Inventor: NØRSKOV, Jan, 6715 Esbjerg N Denmark (DK)
(74) Representative: Larsen & Birkeholm A/S
(86) International application number: PCT/EP2017/078824
(87) International publication number: WO 2018/099707

(56) References cited:
- WO-A1-2015/185063
- US-A1- 2009 201 123
- US-A1- 2012 206 270
- US-A1- 2014 300 477

## Description

### Technical field of the invention

The present invention relates to monitoring equipment in rat traps for positioning in sewers, shafts, and wells.

### Background of the invention

Today, monitoring means, such as sensors, are positioned in rat traps for use in sewers and shafts to measure many different conditions. Signals produced by a sensor are relayed above the ground to a sensor monitoring and control unit via cables. However, such a communication system is time consuming to install, and the cables are susceptible to the sometimes very hostile environment within the sewer or shaft. To avoid the latter, very expensive cables are used. However, rodents present in sewers and shafts tend to gnaw in cables, thereby ruining the communication path. Furthermore, the cables are not suitable for drawing through the well or shaft opening and across a road, for obvious reasons. Document US2014300477 A1 discloses a remote notification electronic rodent trapping system having a plurality of electronic rodent trapping devices configured to wirelessly communicate trap information to each other and to a PC or wireless device.

It is therefore desirable to provide a transmission system that avoids or at least alleviates the above-mentioned problems.

### Summary of the invention

A first aspect relates to a wireless transmission system for monitoring equipment in rat traps positioned in sewers, shafts and wells comprising:
- a transmitter unit embedded in a rat trap, and configured for receiving monitoring data from a monitoring equipment embedded within said rat trap, and for transmitting the received monitoring data;
- a wireless repeater or a wireless relay configured for receiving the monitoring data from said monitoring equipment; and
- a receiver unit adapted for being positioned within a range of 0-100 meters from the well or shaft cover, and configured for receiving a monitoring data signal from a monitoring equipment repeated by the wireless repeater and/or the wireless relay.

A second aspect relates to a wireless transmission system for monitoring equipment in rat traps positioned in sewers, shafts and wells comprising:
- a transmitter unit embedded in a rat trap, and configured for receiving monitoring data from a monitoring equipment embedded within said rat trap, and for transmitting the received monitoring data;
- a wireless repeater or a wireless relay configured for receiving the monitoring data from said monitoring equipment;
- positioning means adapted for positioning and/or attaching the wireless repeater or wireless relay 5-100 cm below the well or shaft cover; and
- a receiver unit adapted for being positioned within a range of 0-100 meters from the well or shaft cover, and configured for receiving a monitoring data signal from a monitoring equipment repeated by the wireless repeater and/or the wireless relay.

In the present context, the term "repeater" means a system that receives, amplifies, and re-transmits a wireless signal without extracting the user information or converting the communications protocol. The term "relay" refers to a system that receives, decodes, data regenerates, data transmits, encodes, amplifies, and re-transmits a wireless signal.

The terms "monitoring means" or "monitoring equipment" should be understood very broadly in this context. However, some monitoring means or monitoring equipment are given preference, such as sensors, and flowmeters, e.g. a rat kill monitoring means e.g. embodied as a shock sensor, or a motion sensor.

In one or more embodiments, the transmission system comprises positioning means adapted for positioning and/or attaching the wireless repeater or wireless relay 5-100 cm below the well or shaft cover, such as within the range of 10-95 cm, e.g. within the range of 15-90 cm, such as within the range of 20-85 cm, e.g. within the range of 25-80 cm, such as within the range of 30-75 cm, e.g. within the range of 35-70 cm, such as within the range of 40-65 cm, e.g. within the range of 45-60 cm. This position is important to avoid shielding from the well or shaft cover that is often made of metal. Furthermore, the surrounding soil layer around the well or shaft must not be too thick in order for the emitted signal to pass through. This is why the transmission system cannot work without the wireless repeater or wireless relay, as the emitted signal from the transmitter unit, positioned in close relation to the monitoring equipment within the sewer or on the bottom of the well or shaft, cannot penetrate the surrounding soil layer around the well or shaft; and the well or shaft cover will block the remaining signal.

In one or more embodiments, the transmission system comprises a receiver unit adapted for being positioned and/or attached within a range of 0-100 meters from the well or shaft cover, such as within the range of 1-95 meters, e.g. within the range of 2-90 meters, such as within the range of 3-85 meters, e.g. within the range of 4-80 meters, such as within the range of 5-85 meters, e.g. within the range of 10-70 meters, such as within the range of 15-65 meters, e.g. within the range of 20-60 meters, such as within the range of 25-55 meters, e.g. within the range of 30-50 meters, such as within the range of 35-45 meters. Often the well is positioned below a road, and hence, the receiver unit cannot be blocking the road. Thus, the receiver unit should be configured to receive the signal from the wireless repeater or wireless relay at a distance from the well cover. On the other hand, it is preferred that the battery life of the repeater or wireless relay is as long as possible to reduce underground service. Hence, the receiver unit should be positioned as close as possible to the well cover to avoid spending too much energy on transmission from the repeater or wireless relay. This leads to an overall energy reduction of the entire system, which increases the battery life of all components.

In one or more embodiments, the positioning means comprises an extendable rod with means provided for locking said extendable rod in a determined length; wherein the extendable rod further comprises means arranged in both ends of for engaging the side wall of a well.

In one or more embodiments, the transmitter unit is configured for transmitting with a wavelength and frequency that cannot penetrate the water when the transmitter is positioned under water, such as under 10-100 cm of water.

In one or more embodiments, the transmitter unit is configured for transmitting with a wavelength and frequency that is at least partly absorbed in water or in water comprising conducting contaminants, such as salts, and wherein the wireless repeater and/or the receiver unit are configured for measuring the time period between received monitoring data signals. The time period will give an indirect indication on whether the well or shaft is flooded. When flooded, the signal is unable to pass through the water or the contaminated water, as it is poorly conducting, and furthermore may reflect the signal.

In one or more embodiments, wherein when the time period between received monitoring data signals exceeds a predetermined threshold, the wireless repeater and/or the receiver unit are configured for logging an alarm and/or creating and transmitting an alarm signal. This is important, as a time period exceeding e.g. 20 minutes is an indication of a blockage of the sewer, which will cause sewage water to rise and escape the sewage system through any possible opening, such as into e.g. a basement of a household.

The transmission system is particularly useful for rodent traps (especially rat traps), as there is no system available for continuous wireless communication with a trap mounted within a well and sewer system. Cables are not suitable for drawing through the well opening and across a road, for obvious reasons; and the rats will gnaw on the cables. Therefore, some traps are connected via cables to a control box positioned right below the well cover. The control box comprises a GSM module configured for transmitting monitoring data. However, this setup does not provide a stabile communication to a receiver, as the GSM signal is blocked by the cover and the surrounding soil layer around the well.

The monitoring equipment is embedded in a rat trap. Such equipment may monitor the release of the trap, or the presence of a rat in or near the trap. If the killing means in the trap is released by use of pressurized gas, such as carbon dioxide, the monitoring equipment may be a shock sensor, such as a G-sensor.

The transmitter unit is embedded in a rat trap. This configuration will avoid external cabling.

In one or more embodiments, the receiver unit is configured for transmitting the received monitoring data and potential alarm signals to a server at a network location. This configuration will allow for a continuous connection with the monitoring equipment. The signal may be transmitted by e.g. satellite, 4G, 3G, 5G, radio link, GSM, LTE, and/or UMTS.

A third aspect relates to the use of a transmission system according to the present invention for rodent control in sewers or shafts, wherein the wireless repeater or wireless relay is positioned 5-100 cm below a) the well cover of a well in fluid communication with a sewer or b) the shaft cover, and wherein the receiver unit is positioned on the ground within a range of 0-100 meters from said well cover or shaft cover.

In one or more embodiments, the monitoring data comprises information about the activity of the killing means of a rat trap.

In one or more embodiments, the monitoring data comprises information about the presence of rats within the sewer, well or shaft.

In one or more embodiments, the wireless repeater and/or the wireless relay and/or the transmitter unit and/or the receiver unit are configured to emit an ON/OFF synchronizing signal. Synchronization of the different units reduces the energy consumption, and the battery within the different units will last longer. This is important, as the service frequency of the individual units is thereby also reduced.

In one or more embodiments, the wireless repeater and/or the wireless relay is configured to ON/OFF synchronize with the transmitter unit.

In one or more embodiments, the transmitter unit is configured to ON/OFF synchronize with the wireless repeater and/or the wireless relay.

In one or more embodiments, the wireless repeater and/or the wireless relay is configured to ON/OFF synchronize with the transmitter unit; and the transmitter unit is configured to ON/OFF synchronize with the wireless repeater and/or the wireless relay.

It should be noted that embodiments and features described in the context of one of the aspects of the present invention also apply to the other aspects of the invention, as defined by the appended claims.

### Brief description of the figures

Figure 1 shows a transmission system in accordance with various embodiments of the invention; and
Figure 2 shows the positioning means in accordance with various embodiments of the invention.

### Detailed description of the invention

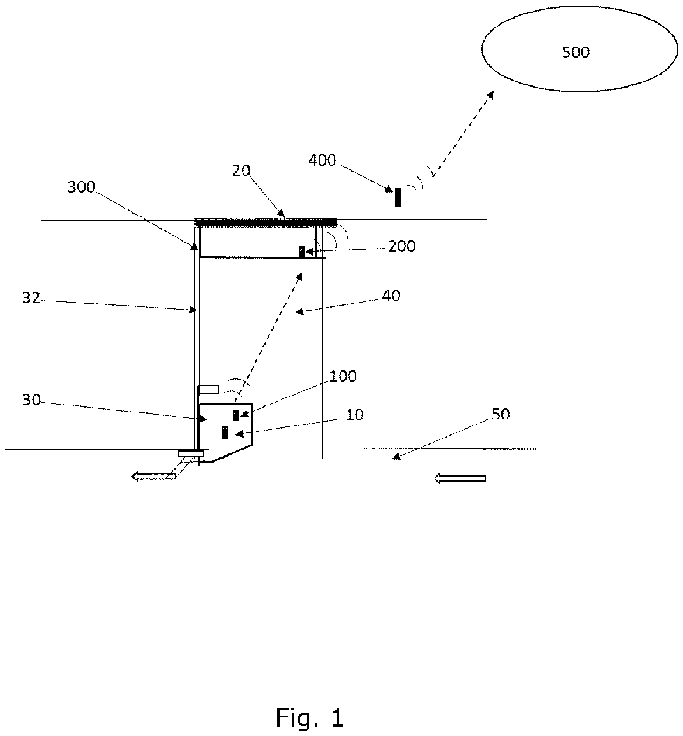

Referring to Figure 1, the general scheme of the invention is shown. Figure 1 shows a transmission system for monitoring equipment 10 embedded in a rat trap 30. The transmission system comprises a transmitter unit 100, a wireless repeater or wireless relay 200, positioning means 300, and a receiver unit 400. The transmitter unit 100 is configured for receiving monitoring data from a monitoring equipment 10 embedded in a rat trap 30, and for transmitting the received monitoring data. The wireless repeater or wireless relay 200 is configured for receiving the monitoring data from the monitoring equipment 10. The positioning means 300 is adapted for positioning the wireless repeater or wireless relay 200 at a position below the well cover 20, preferably 5-100 cm below the well cover 20. The receiver unit 400 is adapted for being positioned within a range of 0-100 meters from the well or shaft cover 20, and configured for receiving a monitoring data signal from a monitoring equipment 10 repeated by the wireless repeater and/or the wireless relay 200. The receiver unit 400 is also configured for transmitting the received monitoring data to a server 500 at a network location.

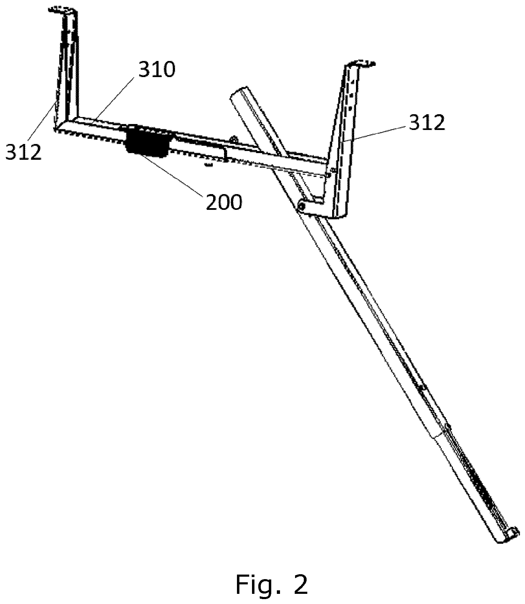

Figure 2 shows the positioning means 300 in accordance with various embodiments of the invention. The positioning means 300 comprises an extendable rod 310 with means provided for locking said extendable rod 310 in a determined length. Furthermore, means 312 are arranged in both ends of the extendable rod 310 for engaging the side wall of a well. The positioning means 300 are also adapted as anchoring means for anchoring the rat trap 30 with a wire 32 (Figure 1).

### References

- 10: Monitoring equipment
- 20: Well cover
- 30: Rat trap
- 32: Wire
- 40: Well
- 50: Sewer
- 100: Transmitter unit
- 200: Wireless repeater or wireless relay
- 300: Positioning means
- 310: Extendable rod
- 312: Means for engaging the side wall of a well or shaft
- 400: Receiver unit
- 500: Server

## Claims

1. A wireless transmission system for monitoring equipment in rat traps positioned in sewers, shafts and wells comprising:
- a transmitter unit (100) embedded in a rat trap (30), and configured for receiving monitoring data from a monitoring equipment (10) embedded within said rat trap (30), and for wirelessly transmitting the received monitoring data; and
- a receiver unit (400) adapted for being positioned within a range of 0-100 meters from the well or shaft cover (20), and configured for receiving a monitoring data signal from a monitoring equipment (10); the wireless transmission system further comprises:
- a wireless repeater or wireless relay (200) configured for wirelessly receiving the monitoring data from said monitoring equipment (10) via said transmitter unit (100); and
- positioning means (300) adapted for positioning and/or attaching the wireless repeater or wireless relay (200) 5-100 cm below the well or shaft cover (20); wherein said receiver unit (400) is configured for receiving a monitoring data signal from said monitoring equipment (10) via said wireless repeater and/or said wireless relay (200).

2. A transmission system according to claim 1, wherein the positioning means (300) comprises an extendable rod (310) with means provided for locking said extendable rod in a determined length; wherein the extendable rod further comprises means (312) arranged in both ends of for engaging the side wall of a well or shaft.

3. A transmission system according to any one of the claims 1-2, wherein the transmitter unit (100) is configured for transmitting with a wavelength and frequency that a) is at least partly absorbed or reflected in water and/or b) is at least partly absorbed or reflected in water comprising conducting contaminants and/or c) that cannot pass through 10-100 cm of water or water comprising conducting contaminants; and wherein the wireless repeater or wireless relay (200) and/or the receiver unit (400) are configured for measuring the time period between received monitoring data signals.

4. A transmission system according to claim 3; wherein when the time period between received monitoring data signals exceeds a predetermined threshold, the wireless repeater or wireless relay (200) and/or the receiver unit (400) are configured for logging an alarm and/or creating and transmitting an alarm signal.

5. A transmission system according to any one of the claims 1-4, wherein the monitoring equipment (10) is a rat kill monitoring means, such a shock sensor, or a motion sensor.

6. A transmission system according to any one of the claims 1-5, wherein the killing means in the trap is released by use of pressurized gas, such as carbon dioxide.

7. A transmission system according to any one of the claims 1-6, wherein the receiver unit (400) is configured for transmitting the received monitoring data and potential alarm signals to a server (500) at a network location.

8. Use of a transmission system according to any one of the claims 1-7 for rodent control in sewers or shafts, wherein the wireless repeater or wireless relay (200) is positioned 5-100 cm below a) the well cover (20) of a well in fluid communication with a sewer or b) the shaft cover, and wherein the receiver unit is positioned on the ground within a range of 0-100 meters from said well cover (20) or shaft cover.

9. Use according to claim 8, wherein the monitoring data comprises information about the activity of the killing means of a rat trap.

10. Use according to any one of the claims 8-9, wherein the monitoring data comprises information about the presence of rats within the sewer, well or shaft.

## Patentansprüche

1. Drahtloses Übertragungssystem zur Überwachung von Ausrüstung in Rattenfallen, die in Kanälen, Schächten und Brunnen angeordnet sind:
- eine Sendeeinheit (100), die in eine Rattenfalle (30) eingebettet und konfiguriert ist, um Überwachungsdaten von einer Überwachungsausrüstung (10) zu empfangen, die in die Rattenfalle (30) eingebettet ist und um die empfangenen Überwachungsdaten drahtlos zu übertragen; und
- eine Empfangseinheit (400), die angepasst ist, um innerhalb eines Bereichs von 0-100 Metern von der Brunnen- oder Schachtabdeckung (20) angeordnet zu sein und konfiguriert ist, um ein Überwachungsdatensignal von einer Überwachungsausrüstung (10) zu empfangen;
wobei das drahtlose Übertragungssystem ferner Folgendes umfasst:
- einen drahtlosen Repeater oder ein drahtloses Relais (200), der bzw. das dazu konfiguriert ist, die Überwachungsdaten von der Überwachungsausrüstung (10) drahtlos über die Sendeeinheit (100) zu empfangen; und
- ein Positionierungsmittel (300), das angepasst ist, um den drahtlosen Repeater oder das drahtlose Relais (200) 5-100 cm unterhalb der Brunnen- oder Schachtabdeckung (20) anzuordnen und/oder anzubringen;
wobei die Empfangseinheit (400) konfiguriert ist, um ein Überwachungsdatensignal von der Überwachungsausrüstung (10) über den drahtlosen Repeater und/oder das drahtlose Relais (200) zu empfangen.

2. Übertragungssystem nach Anspruch 1, wobei das Positionierungsmittel (300) eine ausfahrbare Stange (310) umfasst, wobei Mittel zum Verriegeln der ausfahrbaren Stange bei einer bestimmten Länge vorgesehen sind; wobei die ausfahrbare Stange ferner Mittel (312) umfasst, die an beiden Enden eingerichtet sind, um die Seitenwand eines Brunnens oder Schachts in Eingriff zu nehmen.

3. Übertragungssystem nach einem der Ansprüche 1-2, wobei die Sendeeinheit (100) konfiguriert ist, um mit einer Wellenlänge und Frequenz zu übertragen, die a) zumindest teilweise in Wasser absorbiert oder reflektiert wird und/oder b) zumindest teilweise in Wasser absorbiert oder reflektiert wird, das leitende Verunreinigungen umfasst und/oder c) die nicht durch 10-100 cm Wasser oder Wasser hindurchgehen kann, das leitende Verunreinigungen umfasst; und wobei der drahtlose Repeater oder das drahtlose Relais (200) und/oder die Empfangseinheit (400) konfiguriert ist bzw. sind, um den Zeitraum zwischen empfangenen Überwachungsdatensignalen zu messen.

4. Übertragungssystem nach Anspruch 3; wobei, wenn der Zeitraum zwischen empfangenen Überwachungsdatensignalen einen vorgegebenen Schwellenwert überschreitet, der drahtlose Repeater oder das drahtlose Relais (200) und/oder die Empfangseinheit (400) konfiguriert ist bzw. sind, um einen Alarm zu protokollieren und/oder ein Alarmsignal zu erzeugen und übertragen.

5. Übertragungssystem nach einem der Ansprüche 1-4, wobei die Überwachungsausrüstung (10) ein Rattentötungsüberwachungsmittel, wie etwa ein Schocksensor oder ein Bewegungssensor, ist.

6. Übertragungssystem nach einem der Ansprüche 1-5, wobei das Tötungsmittel in der Falle unter Verwendung von Druckgas, wie etwa Kohlenstoffdioxid, freigesetzt wird.

7. Übertragungssystem nach einem der Ansprüche 1-6, wobei die Empfangseinheit (400) konfiguriert ist, um die empfangenen Überwachungsdaten und möglichen Alarmsignale zu einem Server (500) an einer Netzwerkadresse zu übertragen.

8. Verwendung eines Übertragungssystems nach einem der Ansprüche 1-7 zur Bekämpfung von Nagetieren in Kanälen oder Schächten, wobei der drahtlose Repeater oder das drahtlose Relais (200) 5-100 cm unter a) der Brunnenabdeckung (20) eines Brunnens in Fluidkommunikation mit einem Kanal oder b) der Schachtabdeckung angeordnet ist, und wobei die Empfangseinheit auf dem Boden innerhalb eines Bereichs von 0-100 Metern von der Brunnenabdeckung (20) oder Schachtabdeckung angeordnet ist.

9. Verwendung nach Anspruch 8, wobei die Überwachungsdaten Informationen über die Aktivität des Tötungsmittels einer Rattenfalle umfassen.

10. Verwendung nach einem der Ansprüche 8-9, wobei die Überwachungsdaten Informationen über das Vorhandensein von Ratten in dem Kanal, Brunnen oder Schacht umfassen.

## Revendications

1. Système de transmission sans fil pour surveiller un équipement dans des pièges à rat positionnés dans des égouts, des cheminées verticales et des puits, comprenant :
- une unité d'émetteur (100) intégrée dans un piège à rat (30), et configurée pour recevoir des données de surveillance à partir d'un équipement de surveillance (10) intégré à l'intérieur dudit piège à rat (30) et pour transmettre sans fil les données de surveillance reçues ; et
- une unité de récepteur (400) adaptée pour être positionnée dans un rayon de 0-100 mètres du puits ou du couvercle de cheminée verticale (20), et configurée pour recevoir un signal de données de surveillance à partir d'un équipement de surveillance (10) ;
le système de transmission sans fil comprend en outre :
- un répéteur sans fil ou un relais sans fil (200) configuré pour recevoir sans fil les données de surveillance à partir dudit équipement de surveillance (10) via ladite unité d'émetteur (100) ; et
- des moyens de positionnement (300) adaptés positionner et/ou fixer le répéteur sans fil ou le relais sans fil (200) 5-100 cm au-dessous du puits ou du couvercle de cheminée verticale (20) ; dans lequel ladite unité de récepteur (400) est configurée pour recevoir un signal de données de surveillance à partir dudit équipement de surveillance (10) via ledit répéteur sans fil et/ou ledit relais sans fil (200).

2. Système de transmission selon la revendication 1, dans lequel les moyens de positionnement (300) comprennent une tige pouvant être allongée (310) avec des moyens prévus pour bloquer ladite tige pouvant être allongée à une longueur déterminée ; dans lequel la tige pouvant être allongée comprend en outre des moyens (312) disposés dans les deux extrémités pour engager la paroi latérale d'un puits ou d'une cheminée verticale.

3. Système de transmission selon l'une quelconque des revendications 1-2, dans lequel l'unité d'émetteur (100) est configurée pour transmettre avec une longueur d'onde et une fréquence qui a) est au moins partiellement absorbée ou réfléchie dans l'eau et/ou b) est au moins partiellement absorbée ou réfléchie dans une eau contenant des contaminants conducteurs et/ou c) ne peut pas passer à travers 10-100 cm d'eau ou d'eau contenant des contaminants conducteurs ; et dans lequel le répéteur sans fil ou le relais sans fil (200) et/ou l'unité de récepteur (400) sont configurés pour mesurer la période de temps entre des signaux de données de surveillance reçus.

4. Système de transmission selon la revendication 3, dans lequel la période de temps entre des signaux reçus de données de surveillance dépasse un seuil prédéterminé, le répéteur sans fil ou le relais sans fil (200) et/ou l'unité de récepteur (400) sont configurés pour enregistrer une alarme et/ou créer et transmettre un signal d'alarme.

5. Système de transmission selon l'une quelconque des revendications 1-4, dans lequel l'équipement de surveillance (10) est un moyen de surveillance de mort de rat, tel qu'un capteur de choc ou un capteur de mouvement.

6. Système de transmission selon l'une quelconque des revendications 1-5, dans lequel le moyen de mise à mort dans le piège est libéré par l'utilisation d'un gaz sous pression, tel que le dioxyde de carbone.

7. Système de transmission selon l'une quelconque des revendications 1-6, dans lequel l'unité de récepteur (400) est configurée pour transmettre les signaux reçus de données de surveillance et d'alarme potentielle à un serveur (500) au niveau d'un emplacement de réseau.

8. Utilisation d'un système de transmission selon l'une quelconque des revendications 1-7 pour la lutte contre les rongeurs dans des égouts ou des cheminées verticales, dans laquelle le répéteur sans fil ou le relais sans fil (200) est positionné 5-100 cm au-dessous a) du couvercle de puits (20) d'un puits en communication de fluide avec un égout ou b) du couvercle de cheminée verticale, et dans laquelle l'unité de récepteur est positionnée sur le sol dans un rayon de 0-100 mètres dudit couvercle de puits (20) ou couvercle de cheminée verticale.

9. Utilisation selon la revendication 8, dans laquelle les données de surveillance comprennent des informations sur l'activité du moyen de mise à mort d'un piège à rat.

10. Utilisation selon l'une quelconque des revendications 8-9, dans laquelle les données de surveillance comprennent des informations sur la présence de rats dans l'égout, le puits ou la cheminée verticale.
